# DEMANDE DE BREVET EUROPEEN

(11) **EP 1 583 342 A1**
(43) Date de publication de la demande: **05.10.2005**
(21) Numéro de dépôt: 05290668.2
(22) Date de dépôt: 25.03.2005
(51) Int. Cl.: H04M 3/56

(54) **Procédé et système d'activation d'une téléconférence vocale à partir d'un message électronique écrit**

(30) Priorité: 30.03.2004 FR 0403290
(71) Demandeur: FRANCE TELECOM, 75015 Paris (FR)
(72) Inventeur: Le Corre, Hervé, 14930 Eterville (FR); Collette, Christian, 14790 Verson (FR); Khatchadourian, Grégoire, 76530 Grand Couronne (FR)
(74) Mandataire: Bentz, Jean-Paul

(57) **Abrégé**

Pour activer une téléconférence vocale par l'intermédiaire d'au moins un réseau téléphonique, ce procédé comprend des étapes au cours desquelles : un serveur d'activation de téléconférences (10) reçoit d'un organisateur d'une téléconférence un message électronique non formaté adressé également à des participants d'une téléconférence, et analyse le message pour en extraire des identifiants de l'organisateur et des participants ; le serveur d'activation (10) détermine à partir des identifiants extraits les numéros de téléphones respectifs de l'organisateur et des participants ; le serveur d'activation (10) détermine une date et heure d'activation de téléconférence dans le message reçu, et attribue à la téléconférence une ligne téléphonique disponible d'un pont de téléconférence (8), pour la date et heure d'activation déterminée ; à la date et heure d'activation de la téléconférence, le serveur d'activation (10) établit une communication téléphonique entre la ligne téléphonique attribuée à la téléconférence d'une part et d'autre part, l'organisateur et chaque participant.

## Description

La présente invention concerne un procédé et un système permettant d'activer une téléconférence vocale ou audio.

Elle s'applique notamment, mais non exclusivement à la téléphonie fixe, mobile ou par voix sur IP, publique ou privée.

Actuellement, il existe des systèmes permettant d'établir une téléconférence entre plusieurs participants fonctionnant de la manière suivante. Un numéro de téléphone spécifique est attribué à l'organisateur de la téléconférence, de façon temporaire ou pour une durée déterminée. Ce numéro de téléphone peut en outre être associé à un code confidentiel qui doit être introduit par les participants pour leur permettre d'accéder à la téléconférence.
L'organisateur transmet aux autres participants de la téléconférence, le numéro de téléphone spécifique, la date et l'heure de la téléconférence, et le cas échéant, le code confidentiel. A l'heure prévue de la téléconférence, les participants doivent composer le numéro de téléphone et le cas échéant le code confidentiel.
Cette procédure s'avère relativement longue.

Certains opérateurs téléphoniques ou équipements de téléphonie privés proposent également un service de conférence à trois, permettant lors d'une communication entre deux personnes (point à point) d'intégrer un troisième interlocuteur. A cet effet, l'une des deux personnes en communication doit composer sur son clavier téléphonique une séquence DTMF (Dual Tone Multi Frequency) contenant le numéro de téléphone du troisième interlocuteur.

Les deux procédures décrites ci-dessus présentent l'inconvénient de manquer de souplesse et de ne pas s'intégrer avec les applications bureautiques couramment utilisées.

Il existe également des systèmes de messagerie instantanée permettant à des utilisateurs connectés à un réseau IP de dialoguer en temps réel à plusieurs interlocuteurs soit par écrit, soit sous forme vocale, à l'aide d'un terminal tel qu'un ordinateur connecté à un réseau IP privé ou public (Internet). Cette solution nécessite que chaque interlocuteur dispose d'un terminal connecté au même réseau de messagerie instantanée et donc équipé du même logiciel de messagerie instantanée et de moyens de dialogue vocal (microphone, haut-parleur). En outre, contrairement au téléphone, cette solution ne permet pas d'appeler un utilisateur qui à l'instant souhaité n'a pas activé son système de messagerie instantanée.

Le brevet n° FR 2 792 480 déposé par la Demanderesse décrit un système permettant de piloter un autocommutateur téléphonique à partir d'un système informatique pour mettre en oeuvre des services téléphoniques. Ce document ne décrit pas de moyens de téléconférence.

D'une manière générale, il n'existe pas de solution universelle permettant de passer simplement d'une discussion effectuée par écrit sous la forme d'échange de messages électroniques (email ou messagerie instantanée) à une discussion vocale.

La présente invention a pour but de supprimer ces inconvénients. Cet objectif est atteint par la prévision d'un procédé d'activation d'une téléconférence vocale par l'intermédiaire d'au moins un réseau téléphonique.

Selon l'invention, ce procédé comprend des étapes au cours desquelles :
- un serveur d'activation de téléconférences reçoit d'un organisateur d'une téléconférence un message électronique non formaté adressé également à des participants d'une téléconférence, et analyse le message pour en extraire des identifiants de l'organisateur et des participants à la téléconférence,
- le serveur d'activation de téléconférences détermine à partir des identifiants extraits des numéros de téléphones respectifs grâce auxquels l'organisateur et les participants peuvent être appelés,
- le serveur d'activation de téléconférences détermine une date et heure d'activation d'une téléconférence entre l'organisateur et les participants identifiés dans le message reçu, et attribue à la téléconférence une ligne téléphonique parmi un ensemble de lignes téléphoniques disponibles d'un pont de téléconférence, pour la date et heure d'activation déterminée,
- à la date et heure déterminées de la téléconférence, le serveur d'activation de téléconférences commande l'établissement d'une communication téléphonique entre la ligne téléphonique attribuée à la téléconférence d'une part et d'autre part, l'organisateur et chaque participant.

Avantageusement, les identifiants extraits du message électronique sont des adresses de boîtes de messagerie électronique, l'identifiant de l'organisateur étant extrait d'un champ spécifiant l'émetteur du message électronique, et les identifiants des participants étant extraits de champs spécifiant des destinataires du message électronique.

Selon un mode de réalisation de l'invention, le message électronique reçu contient une information sur la date et heure de la téléconférence, souhaitée par l'organisateur.

De préférence, l'information sur la date et heure de la téléconférence indique si la conférence doit être activée immédiatement ou en différé.

Selon un mode de réalisation de l'invention, le serveur d'activation de téléconférences détermine la date et heure de la téléconférence en fonction d'informations de disponibilité respectives de l'organisateur et des participants, ces informations étant accessibles par l'intermédiaire d'un serveur d'agenda et/ou de serveurs de gestion de présence donnant des informations sur la joignabilité des participants par leur numéro de téléphones respectifs.

Selon un mode de réalisation de l'invention, ce procédé comprend en outre une étape de mise à disposition de l'organisateur d'une interface de spécification de paramètres de la téléconférence, permettant à l'organisateur de modifier lesdits paramètres avant et/ou pendant la téléconférence.

Avantageusement, l'interface de spécification permet d'ajouter un participant à la téléconférence.

Selon un mode de réalisation de l'invention, le serveur d'activation de téléconférences transmet à l'organisateur un message électronique de confirmation contenant l'adresse d'une interface de spécification de paramètres de la téléconférence et donnant la liste des participants et la date et heure prévue de la téléconférence.

L'invention concerne également un système d'activation d'une téléconférence vocale par l'intermédiaire d'au moins un réseau téléphonique.

Selon l'invention, ce système comprend un serveur d'activation de téléconférences connecté à au moins un réseau IP et comprenant :
- des moyens pour recevoir d'un organisateur de téléconférence un message électronique non formaté, adressé également à des participants d'une téléconférence, et pour analyser le message afin d'en extraire des identifiants de l'organisateur et des participants à la téléconférence,
- des moyens pour déterminer à partir des identifiants extraits des numéros de téléphones respectifs grâce auxquels l'organisateur et les participants peuvent être appelés, et
- des moyens pour déterminer une date et heure d'activation d'une téléconférence entre l'organisateur et les participants identifiés dans le message reçu, et pour attribuer à la téléconférence une ligne téléphonique parmi un ensemble de lignes téléphoniques disponibles d'un pont de téléconférence, pour la date et heure d'activation déterminée,
- des moyens pour commander l'établissement à la date et heure déterminée de la téléconférence d'une communication téléphonique entre la ligne téléphonique attribuée à la téléconférence d'une part et d'autre part, des lignes téléphoniques de l'organisateur et de chaque participant,
- le système comprenant des moyens connectés à au moins un réseau téléphonique pour établir sur demande du serveur d'activation de téléconférences une communication téléphonique entre les lignes téléphoniques du pont de téléconférence et des lignes téléphoniques d'utilisateurs.

Selon un mode de réalisation de l'invention, ce système comprend un serveur Web permettant à un organisateur d'une téléconférence de modifier des paramètres de la téléconférence.

Selon un mode de réalisation de l'invention, le serveur d'activation de téléconférences comprend en outre des moyens pour commander l'établissement pendant une téléconférence d'une communication téléphonique entre la ligne téléphonique attribuée à la téléconférence et la ligne téléphonique d'un nouveau participant.

Selon un mode de réalisation de l'invention, les lignes téléphoniques d'au moins une partie des participants à la téléconférence sont des lignes de téléphonie terrestre et/ou mobile et/ou de voix sur IP.

Un mode de réalisation préféré de l'invention sera décrit ci-après, à titre d'exemple non limitatif, avec référence aux dessins annexés dans lesquels :
La figure 1 représente schématiquement un système de télécommunication intégrant un système d'activation de téléconférences vocales ;
Les figures 2a et 2b illustrent sous la forme de séquences d'étapes le procédé selon l'invention.

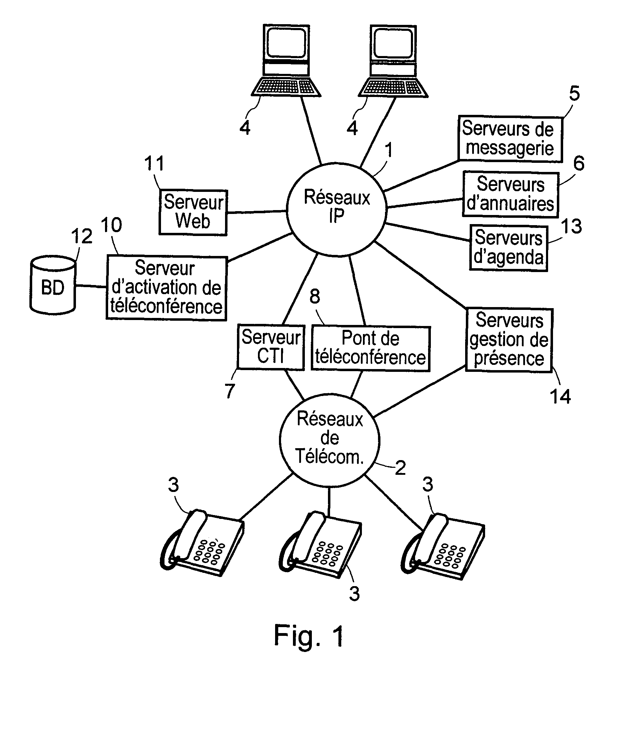

La figure 1 représente un système de télécommunication comprenant des réseaux de télécommunication, téléphoniques 2 et IP 1, les réseaux IP pouvant être privés (Intranet) ou publics (Internet) et être connectés à des terminaux d'utilisateurs 4, des serveurs de messagerie 5 différée ou instantanée permettant aux terminaux d'utilisateurs de s'échanger des messages électroniques, et des serveurs d'annuaires 6 associant les noms des utilisateurs respectivement avec leurs adresses de messagerie électronique et leur numéros de téléphones.

Les réseaux IP 1 peuvent également être connectés à des serveurs d'agenda 13 mémorisant les emplois du temps des utilisateurs, et des serveurs de gestion de présence connectés aux réseaux 1, 2 et fournissant des informations sur l'accessibilité des utilisateurs vis-à-vis d'un ou plusieurs moyens de télécommunication 3, 4.

Les réseaux téléphoniques 2 peuvent être des réseaux téléphoniques terrestres analogiques (RTC) ou numériques (RNIS), ou des réseaux téléphoniques mobiles, tels que GSM ou UMTS. Ils peuvent également être des réseaux IP comportant des canaux de télécommunication voix sur IP (VoIP).

Selon l'invention, ce système comprend également :
- un serveur de couplage téléphonique informatique (CTI) 7 connecté à la fois à au moins un réseau IP 1 et au moins un réseau téléphonique 2 (par exemple par l'intermédiaire d'un autocommutateur téléphonique (PABX) et permettant d'établir des télécommunications avec le réseau téléphonique sur ordres reçus via un réseau IP ;
- un pont de téléconférence 8 connecté à au moins un réseau téléphonique 2 et offrant aux utilisateurs un service de téléconférence ;
- un serveur d'activation de téléconférences 10 connecté à un réseau IP 1 et éventuellement ayant accès à une interface de gestion et de commande du pont de téléconférence 8 ; et
- un serveur WEB 11 auquel les utilisateurs peuvent accéder pour gérer une téléconférence mise en oeuvre grâce au serveur d'activation 10 et au pont de téléconférence 8.

Un exemple de réalisation du serveur CTI 7 est par exemple décrit dans le brevet FR 2 792 480.

Le pont de téléconférence 8 met à la disposition des utilisateurs plusieurs lignes téléphoniques physiques ou logiques (voix sur IP), qui sont attribuées chacune à la demande à une téléconférence. Pour entrer en téléconférence les uns avec les autres, les utilisateurs doivent composer le numéro de téléphone correspondant à la ligne qui leur a été attribuée, chaque utilisateur se retrouvant alors en communication avec les autres utilisateurs ayant composé préalablement ce numéro.
L'interface de gestion et de commande du pont de téléconférence peut être accessible par l'intermédiaire d'un réseau IP 1 ou d'un réseau téléphonique 2. Dans ce dernier cas, le serveur d'activation de téléconférences 10 est également connecté à un réseau téléphonique pour avoir accès à cette interface de gestion et de commande.

Un tel pont de téléconférence est par exemple décrit dans le brevet EP 0 515 241 déposé par la Demanderesse.

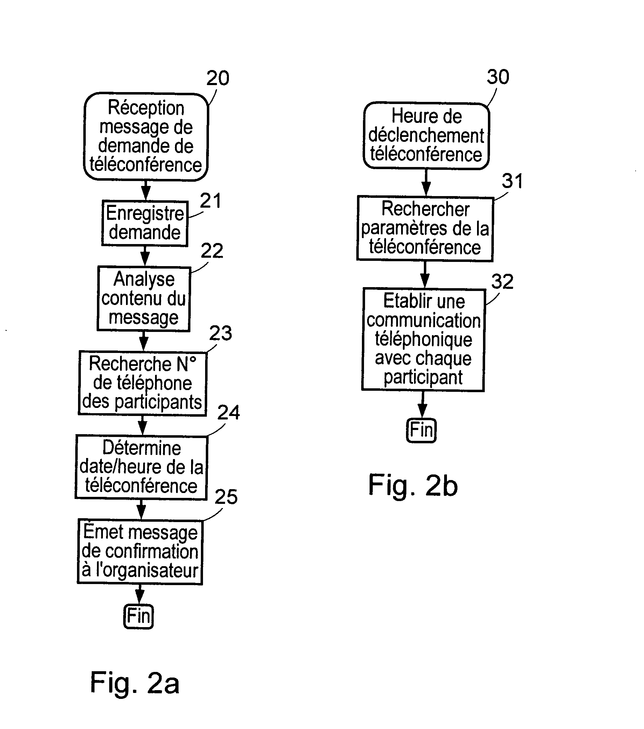

Le serveur 10 d'activation de téléconférences dispose d'une adresse de messagerie électronique pour recevoir des utilisateurs des demandes de téléconférence.
Le serveur 10 est en outre conçu pour exécuter les procédures 20 et 30 représentées par les figures 2a et 2b, respectivement à la réception d'un message de demande de téléconférence et au moment du déclenchement d'une téléconférence.

Sur la figure 2a, la procédure 20 qui est déclenchée à la suite de la réception d'un message électronique de demande de téléconférence, comprend une première étape 21 d'enregistrement de la demande de téléconférence ainsi reçue et d'attribution d'un identifiant (numéro) à cette demande. A l'étape suivante 22, le serveur 10 analyse le message pour déterminer les identités de l'organisateur et des participants de la téléconférence. Ces informations peuvent en effet être extraites respectivement du champ "expéditeur" et des champs "destinataires" (directs et en copie) du message. Dans ce cas, les identités de l'organisateur et des participants se présentent sous la forme d'adresses de boites de messagerie électronique. Le serveur 10 peut également extraire du message la date et l'heure souhaitée de la téléconférence, qui peut être simplement spécifiée sous la forme de mots clés tels que "immédiat" ou "différé", par exemple dans le champ "objet" du message.
Les informations extraites sont enregistrées dans une base de données 12 en association avec le numéro de demande de téléconférence.

A l'étape suivante 23, le serveur 10 recherche les numéros de téléphones de l'organisateur et des participants à la téléconférence, à partir des identifiants de ces derniers extraits du message.
A cet effet, le serveur 10 peut avoir accès à un serveur d'annuaire 6 mettant en correspondance notamment des adresses de messagerie électronique avec des numéros de téléphones. Si le serveur 10 ne trouve pas dans l'annuaire au moins l'identifiant de l'organisateur et un identifiant de participant, il émet un message d'erreur sous forme électronique à destination de l'organisateur de la téléconférence.

A l'étape suivante 24, le serveur 10 peut en outre déterminer une ou plusieurs dates et heures de la téléconférence en fonction des disponibilités et/ou présence des participants, en accédant au serveur d'agenda 13 et/ou au serveur de gestion de présence 14 des participants. En variante, le serveur 10 peut générer un envoi de message préformaté vers l'organisateur et les participants pour leur demander leurs disponibilités.
Le serveur 10 recherche ensuite si une ligne de téléconférence est disponible à la date et heure de la téléconférence, telle que spécifiée dans le message électronique reçu de l'organisateur ou bien déterminée à partir des disponibilités des participants. Si aucun numéro de téléconférence n'est disponible à la date et heure prévue, il recherche une date et heure disponible à partir de l'heure prévue.

A cet effet, le serveur 10 interroge le pont de téléconférence 8 si ce dernier offre cette possibilité. Sinon, le serveur 10 gère les disponibilités des lignes de téléconférence offertes par le pont de téléconférence.
Le serveur 10 réserve alors la ligne de téléconférence disponible pour la première date et heure possible, soit en en faisant la demande au pont de téléconférence 8, soit en mémorisant l'information localement dans le cadre de sa gestion des disponibilités des lignes de téléconférence. Il mémorise également le numéro de la ligne de téléconférence dans sa base de données 12 en association avec le numéro de la demande de téléconférence.

A l'étape suivante 25, le serveur 10 transmet un message électronique de réponse à l'organisateur de la téléconférence et éventuellement aux participants, ce message contenant l'acceptation de la demande de téléconférence, la date et l'heure prévue de la téléconférence, les identifiants des autres participants, ainsi qu'un lien vers une page Web publiée par le serveur Web 11 fournissant également ces informations et permettant de spécifier ou modifier certains paramètres de la téléconférence.

La page Web est conçue pour permettre à l'organisateur d'une téléconférence de modifier les dates et heures de début et de fin de la téléconférence, ainsi que la liste des participants.

A l'heure prévue de déclenchement de la téléconférence, le serveur 10 exécute la procédure 30 illustrée par la figure 2b. Cette procédure comprend une première étape 31 au cours de laquelle le serveur 10 recherche les paramètres de la téléconférence à déclencher, à savoir le numéro de la téléconférence, et les numéros de téléphones de l'organisateur et des participants. A l'étape suivante 32, le serveur 10 déclenche la téléconférence en demandant au serveur CTI 7 d'établir une communication entre le numéro de la téléconférence et chacun des participants (et organisateur).

L'organisateur peut modifier à tout moment (avant et pendant la téléconférence) la liste des participants à la téléconférence en accédant à la page Web attribuée à la téléconférence par le serveur Web 11, ou en envoyant un nouveau message au serveur 10. Il peut ainsi supprimer un participant avant la téléconférence et ajouter un participant avant ou pendant la téléconférence.
A la réception d'un ordre d'ajout d'un participant pendant la téléconférence, par l'intermédiaire d'un message électronique ou du serveur Web 11, le serveur 10 recherche éventuellement le numéro du participant à ajouter et transmet au serveur CTI 7 un ordre d'établissement de communication téléphonique associé au numéro de la téléconférence et au numéro de téléphone du nouveau participant.

## Revendications

1. Procédé d'activation d'une téléconférence vocale par l'intermédiaire d'au moins un réseau téléphonique,
**caractérisé en ce qu'**il comprend des étapes au cours desquelles :
- un serveur d'activation de téléconférences (10) reçoit d'un organisateur d'une téléconférence un message électronique non formaté adressé également à des participants d'une téléconférence, et analyse le message pour en extraire des identifiants de l'organisateur et des participants à la téléconférence,
- le serveur d'activation de téléconférences (10) détermine à partir des identifiants extraits des numéros de téléphones respectifs grâce auxquels l'organisateur et les participants peuvent être appelés,
- le serveur d'activation de téléconférences (10) détermine une date et heure d'activation d'une téléconférence entre l'organisateur et les participants identifiés dans le message reçu, et attribue à la téléconférence une ligne téléphonique parmi un ensemble de lignes téléphoniques disponibles d'un pont de téléconférence (8), pour la date et heure d'activation déterminée,
- à la date et heure déterminées de la téléconférence, le serveur d'activation de téléconférences (10) commande l'établissement d'une communication téléphonique entre la ligne téléphonique attribuée à la téléconférence d'une part et d'autre part, l'organisateur et chaque participant.

2. Procédé selon la revendication 1,
**caractérisé en ce que** les identifiants extraits du message électronique sont des adresses de boîtes de messagerie électronique, l'identifiant de l'organisateur étant extrait d'un champ spécifiant l'émetteur du message électronique, et les identifiants des participants étant extraits de champs spécifiant des destinataires du message électronique.

3. Procédé selon la revendication 1 ou 2,
**caractérisé en ce que** le message électronique reçu contient une information sur la date et heure de la téléconférence, souhaitée par l'organisateur.

4. Procédé selon la revendication 3,
**caractérisé en ce que** l'information sur la date et heure de la téléconférence indique si la conférence doit être activée immédiatement ou en différé.

5. Procédé selon l'une des revendications 1 à 4,
**caractérisé en ce que** le serveur d'activation de téléconférences (10) détermine la date et heure de la téléconférence en fonction d'informations de disponibilité respectives de l'organisateur et des participants, ces informations étant accessibles par l'intermédiaire d'un serveur d'agenda (13) et/ou de serveurs de gestion de présence (14) donnant des informations sur la joignabilité des participants par leur numéro de téléphones respectifs.

6. Procédé selon l'une des revendications 1 à 5,
**caractérisé en ce qu'**il comprend une étape de mise à disposition de l'organisateur d'une interface de spécification de paramètres de la téléconférence, permettant à l'organisateur de modifier lesdits paramètres avant et/ou pendant la téléconférence.

7. Procédé selon la revendication 6,
**caractérisé en ce que** l'interface de spécification permet d'ajouter un participant à la téléconférence.

8. Procédé selon l'une des revendications 1 à 7,
**caractérisé en ce que** le serveur d'activation de téléconférences (10) transmet à l'organisateur un message électronique de confirmation contenant l'adresse d'une interface de spécification de paramètres de la téléconférence et donnant la liste des participants et la date et heure prévue de la téléconférence.

9. Système d'activation d'une téléconférence vocale par l'intermédiaire d'au moins un réseau téléphonique,
**caractérisé en ce qu'**il comprend un serveur d'activation de téléconférences (10) connecté à au moins un réseau IP (1) et comprenant :
- des moyens pour recevoir d'un organisateur de téléconférence un message électronique non formaté, adressé également à des participants d'une téléconférence, et pour analyser le message afin d'en extraire des identifiants de l'organisateur et des participants à la téléconférence,
- des moyens pour déterminer à partir des identifiants extraits des numéros de téléphones respectifs grâce auxquels l'organisateur et les participants peuvent être appelés, et
- des moyens pour déterminer une date et heure d'activation d'une téléconférence entre l'organisateur et les participants identifiés dans le message reçu, et pour attribuer à la téléconférence une ligne téléphonique parmi un ensemble de lignes téléphoniques disponibles d'un pont de téléconférence (8), pour la date et heure d'activation déterminée,
- des moyens pour commander l'établissement à la date et heure déterminée de la téléconférence d'une communication téléphonique entre la ligne téléphonique attribuée à la téléconférence d'une part et d'autre part, des lignes téléphoniques de l'organisateur et de chaque participant,
- le système comprenant des moyens (7) connectés à au moins un réseau téléphonique (2) pour établir sur demande du serveur d'activation de téléconférences une communication téléphonique entre les lignes téléphoniques du pont de téléconférence (8) et des lignes téléphoniques d'utilisateurs.

10. Système selon la revendication 9,
**caractérisé en ce qu'**il comprend un serveur Web (11) permettant à un organisateur d'une téléconférence de modifier des paramètres de la téléconférence.

11. Système selon la revendication 9 ou 10,
**caractérisé en ce que** le serveur d'activation de téléconférences (10) comprend en outre des moyens pour commander l'établissement pendant une téléconférence d'une communication téléphonique entre la ligne téléphonique attribuée à la téléconférence et la ligne téléphonique d'un nouveau participant.

12. Système selon l'une des revendications 9 à 11,
**caractérisé en ce que** les lignes téléphoniques d'au moins une partie des participants à la téléconférence sont des lignes de téléphonie terrestre et/ou mobile et/ou de voix sur IP.
